# EUROPEAN PATENT SPECIFICATION

(11) **EP 0 796 721 B1**
(45) Date of publication and mention of the grant of the patent: **31.10.2001**
(21) Application number: 95939401.6
(22) Date of filing: 08.12.1995
(51) Int. Cl.: B29C 65/44, B32B 31/08, B32B 31/00

(54) **METHOD AND APPARATUS FOR PRODUCING LAMINATE BOARD**
VERFAHREN UND VORRICHTUNG ZUM HERSTELLEN EINER SCHICHTPLATTE
PROCEDE ET DISPOSITIF DE PRODUCTION DE PANNEAUX STRATIFIES

(30) Priority: 09.12.1994 JP 33196394
(43) Date of publication of application: 24.09.1997
(73) Proprietor: TOYO KOHAN Co., Ltd, Tokyo 100 (JP)
(72) Inventor: KAGUMA, Noriaki Toyo Kohan Co., Ltd. Technical, Kudamatsu-shi Yamaguchi-ken 744 (JP); TANAKA, Atsuo Toyo Kohan Co., Ltd. Technical, Kudamatsu-shi Yamaguchi-ken 744 (JP); IWASHITA, Hiroyuki Toyo Kohan Co., Ltd. Technical, Kudamatsu-shi Yamaguchi-ken 744 (JP); SAKAMOTO, Yoshiki Toyo Kohan Co., Ltd. Technical, Kudamatsu-shi Yamaguchi-ken 744 (JP); INAZAWA, Hiroshi Toyo Kohan Co., Ltd., Yamaguchi-ken 744 (JP)
(74) Representative: Tothill, John Paul
(86) International application number: PCT/JP95/02519
(87) International publication number: WO 96/17721

(56) References cited:
- FR-A- 1 549 824
- JP-A- 1 063 130
- JP-A- 62 216 730

## Description

### Technical field

The present invention relates to a manufacturing method for a laminate sheet and manufacturing apparatus therefor, and more particularly to a manufacturing method for a laminated sheet, in which a thermoplastic resin film is made to contact and pressed to a heated metal sheet, and a manufacturing apparatus for carrying out the manufacturing method.

### Background technology

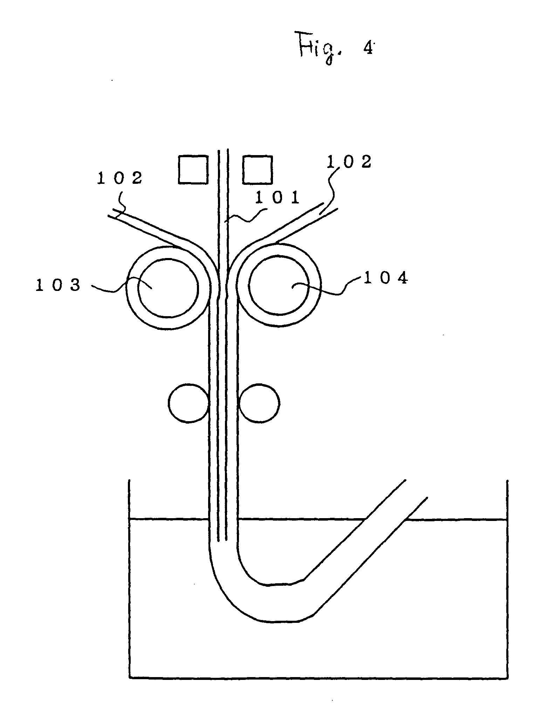

As shown in Figure 4, there is a well known laminating method in which metal sheet 101, heated in an oven, is then made to contact thermoplastic resin film 102, and in which the metal sheet 101 and resin film 102 are both pressed by a couple of laminating rolls (nip rolls) 103 and 104 while film 102 is partially melted by the heat of metal sheet 101 to adhere to metal sheet 101 (see Laid-Open Japanese Patent Hei 4-201237, for example). In such a laminating method, the thickness of the melted portion of film 102 (thickness of a melted layer), and the adhering strength of film 102 to metal sheet 101, can be controlled to some extent by selecting conditions such as the heating temperature of metal sheet 101, the distance from the oven to laminating rolls 103 and 104, the travelling speed of metal sheet 101, and the melting temperature of film 102.

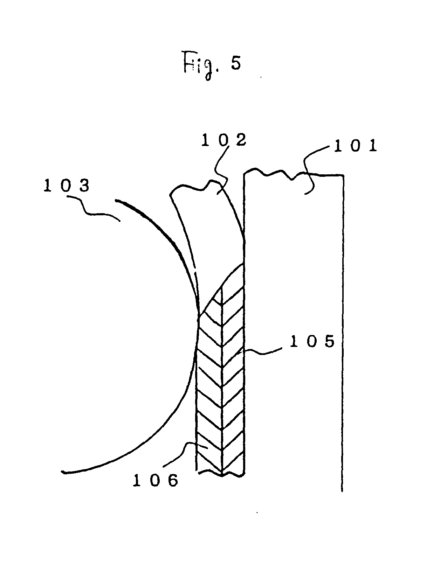

In the conventional method mentioned above, as shown in Figure 5, for example, in a case of laminating an oriented resin film, when film 2 is pressed to metal sheet 101 by laminating rolls 103 and 104 (see Figure 4), a high temperature of metal sheet 101 is transferred to laminating roll 103 of a low temperature through film 102. While the high temperature causes film 102 to form a melted layer 105, the pressed metal sheet 101 and film 102 adhere to each other. After passing through between laminating rolls 103 and 104, metal sheet 101 is free from pressure, and the film surface is no longer cooled, and then the temperature from the metal sheet is transferred to the whole film, which controls the orientation of oriented layer 106 of the film. Therefore, as the travelling speed of metal sheet 101 and film 102 increases, the temperature of the metal sheet should be lowered in order to control the orientation of the oriented layer because the cooling effect by the laminating rolls is not sufficient. For this reason, it is difficult to perform high speed lamination by the conventional laminating method.

On the other hand as a method to increase the melted layer by high speed lamination, heating metal sheet 101 to a higher temperature may be applied. But in this case, cooling by the laminating rolls is not fully effective so that the melted layer may be formed in the whole film, thus reducing the strength of the film. In addition, in a case where such wholly melted film is located inside of a formed can, and when content is packed and storaged in it, the film is easily cracked by outer impact, which often causes the packed content to be rotten.

FR-A-1549824 describes an improved manufacturing apparatus and method for laminating at least one of the surface of a heated metal sheet. The film and the metal sheet are pressed together by two laminate rolls and the laminate sheet is then biased towards one of the laminate rolls.

US 4861409 (equivalent to JP-A-62 216 730) gives details of a process and apparatus for laminating two thermoplastic resin films together.

The independent claims are characterised over FR-A-1549824.

It is the first object of the present invention to solve the problem in the conventional method and to provide a manufacturing method for a laminated sheet in which the laminated sheet has its adhesion increased, and the sufficiently increased adhesion can be obtained even by high speed lamination. The second object of the present invention is to provide a manufacturing apparatus for such a manufacturing method.

### Disclosure of the Invention

The manufacturing method for a laminate sheet of the present invention comprises the steps of heating a continuous metal sheet; laminating a thermoplastic resin film at least on one of the surfaces of the metal sheet; and passing both of them through between a couple of laminate rolls, pressing them, and thermally bonding said film to said metal sheet wherein said laminate sheet coming out from between said couple of laminate rolls is pushed aside by a deflector roll in a transverse direction, characterised in that said deflector roll is a movably arranged deflector roll such that said laminate sheet is pushed aside in a transverse direction so as to bias its travelling direction to either one of said laminate rolls.

The manufacturing apparatus for a laminate sheet of the present invention comprises means for heating a metal sheet; means for supplying a thermoplastic resin film to be laminated at least on one surface of said heated metal sheet; a couple of laminate rolls for pressing said metal sheet and said thermoplastic resin film; a deflector roll, for pushing said laminate sheet, which has come out through the couple of laminate rolls, in a transverse direction; and a guide roll for changing said travelling direction of said laminate sheet which is biassed by said deflector roll back to said original travelling direction of said laminate sheet; characterised in that said deflector roll is arranged to be movable in a direction transverse to the original travelling direction of said laminate sheet, so as to bias its travelling direction to either one of said laminate rolls; and by further comprising a pressure roll for increasing the contacting force of said laminate roll and said laminate sheet when said laminate sheet which has come out through said laminate rolls is pushed aside to one of said laminate rolls.

When pushing the laminate sheet which has passed through between the laminate rolls aside to one of the laminate rolls, the laminate sheet winds round the one laminate roll by a certain angle. During travelling the distance corresponding to that angle, the laminate sheet contacts that laminate roll with some holding strength due to its own tension and meantime the laminate sheet is cooled. Therefore, the metal sheet can have its initial temperature selected to be higher, which permits a melted layer to be thicker during that travelling period. Thus, the thermoplastic resin film and the metal sheet can be more reliably adhered to each other by the pressing force also during that travelling period.

Since the manufacturing apparatus is provided with a deflector roll to deviate the travelling direction of the laminate sheet which has passed through between the couple of laminate rolls, it is possible to deviate the travelling direction without causing any resistance to the travelling of the laminate sheet. The manufacturing apparatus provided with the guide roll for changing the deviated travelling direction back to the original direction can easily be combined with a conventional manufacturing line for a laminate sheet. Further, with apparatus provided with a deflector roll arranged to move in a direction transverse to the original travelling direction of the laminate sheet, it is possible to obtain the most preferable thickness of the melted layer of the film depending on the kind of raw material and the travelling speed of the laminate sheet so that the adhesive strength of the film can be improved to thereby prevent its peeling-off.

### Brief explanation of the drawings

Figure 1 is a schematic front view showing one example of the manufacturing apparatus for a laminate sheet of the present invention.

Figure 2 is a partial cross section of Figure 1.

Figure 3(a) is a graph showing the relationship between the period of time during which the film contacts the laminate roll according to the present invention and the thickness of its melted layer, and Figure 3(b) is a graph showing the relationship between the thickness of the melted layer and the adhesive strength of the film.

Figure 4 is a schematic front view showing one example of the conventional manufacturing apparatus.

Figure 5 is a partial cross section of Figure 4.

Figure 6 is a schematic front view showing another example of the manufacturing apparatus of the present invention.

### The best mode for carrying out the invention

Next, the manufacturing method and the manufacturing apparatus for a laminate sheet of the present invention will be explained more in detail referring to each Figure.

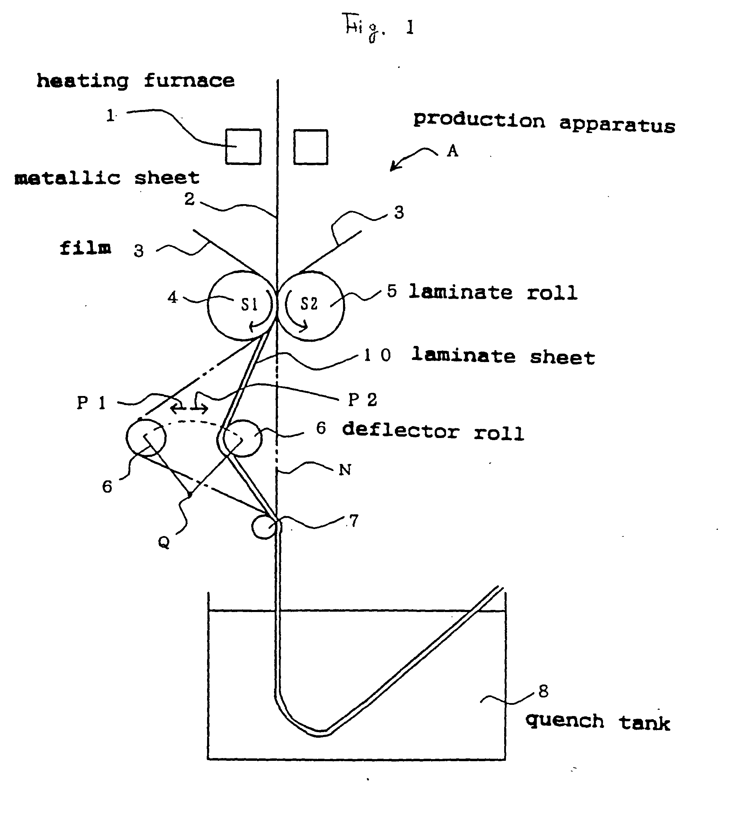

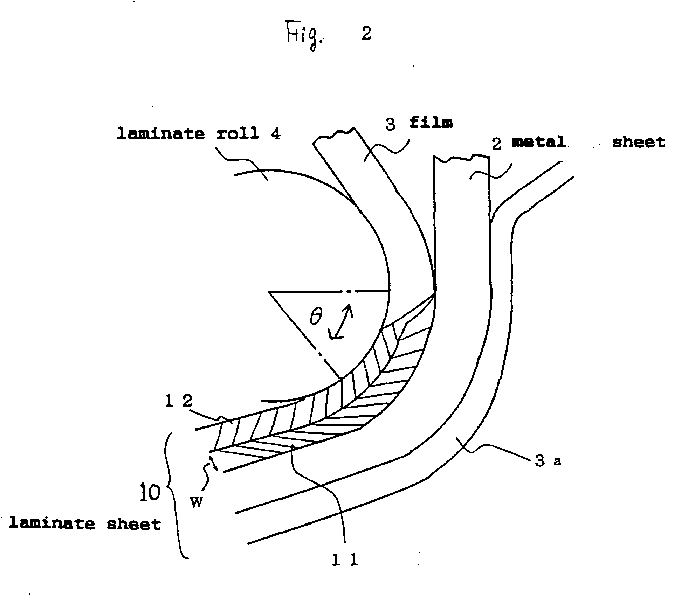

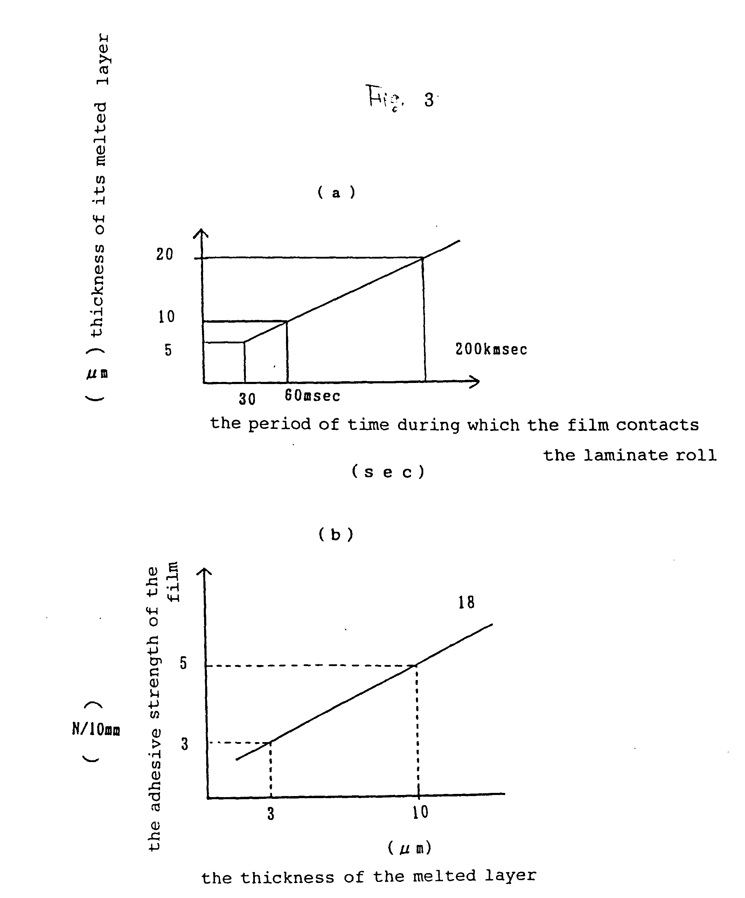

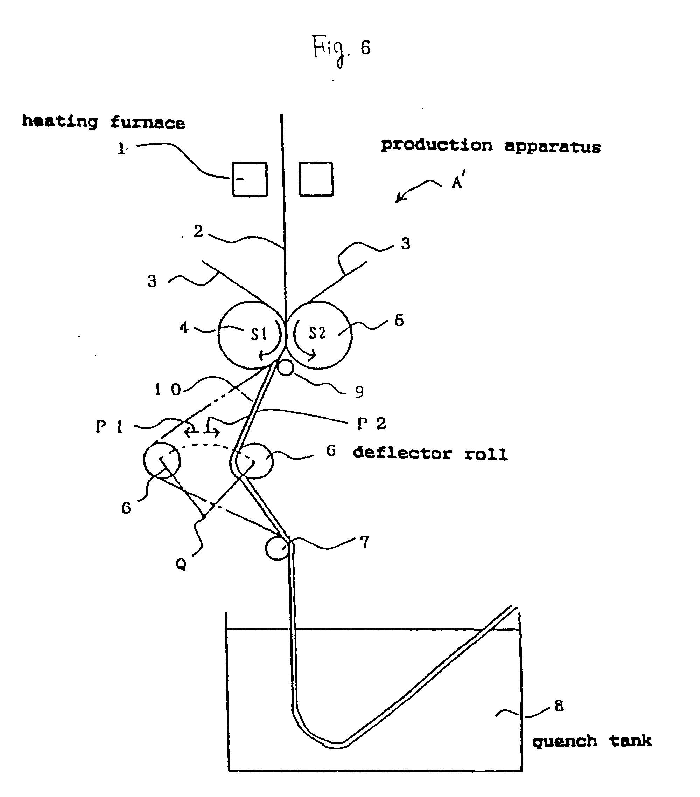

Figure 1 is a schematic front view showing one example of the manufacturing apparatus of the present invention. Figure 2 is a partial cross section of Figure 1. Figure 3(a) is a graph showing the relationship between the period of time during which the film contacts the laminate roll according to the present invention and the thickness of its melted layer, and Figure 3(b) is a graph showing the relationship between the thickness of the melted layer and the adhesive strength of the film (after forming). Figure 6 is a schematic front view showing another example of the manufacturing apparatus of the present invention.

In manufacturing apparatus A for a laminate sheet shown in Figure 1, the denoted figure 1 is an oven through which a metal sheet 2 passes and is heated continuously, and a couple of laminate rolls 4 and 5 are arranged below oven 1 to press and adhere film 3 to metal sheet 2 coming out from oven 1. At a short distance below laminate rolls 4 and 5 is arranged a deflector roll 6 which is rotatable and movable in the directions shown by arrows P1 and P2. Further below deflector roll 6 is rotatably arranged a guide roll 7. The rotation axes of laminate rolls 4 and 5, deflector roll 6 and guide roll 7 are parallel to each other. A quenching tank 8 containing a quenching liquid is arranged below guide roll 7.

Manufacturing apparatus A' is additionally provided with a hold down roll 9 for pressing laminate sheet 10 against laminate roll 4. Pressure roll 9 is rotatable and arranged parallel to laminate roll 4.

Oven 1 can be a conventionally known oven such as a dielectric heating oven. Another heating device such as a heating roll or an induction heating coil can also be used instead of oven 1. The laminate rolls 4 and 5 are prior known ones that act as nip rolls for pinching and pressing metal sheet 2 and film 3 running through between them. Normally, laminate rolls 4 and 5 are each synchronously rotated in the opposite direction (arrow S1 and S2) so as to move laminate sheet 10 downward. The distance between both laminate rolls is adjustable and rotation speed can also be controlled.

Deflector roll 6 has both its ends rotatably supported by bearings (not shown), and the bearings are each synchronously movable in the directions of arrow P1 and P2 using a control cylinder or the like. The positions of the bearings are normally adjusted according to a predetermined laminating condition, but they may be adjustable during the laminating operation. The bearings are arranged to move straight and reciprocatively in a direction perpendicular to the surface of the laminate sheet. They can also be arranged to rotate about an axis Q which is positioned below (or above) their axes and parallel to them, that is, the bearings may be circularly movable as shown by the imaginary line.

Guide roll 7 has both its ends supported by bearings (not shown), and the bearings are each fixed to a frame or the like. Guide roll 7 is arranged at such a position as to contact a tangential line N of laminate rolls 4 and 5. Although not shown, after being taken out from quenching tank 8, laminate sheet 10 is driven downward by another nip roll. Therefore, this causes tension on laminate sheet 10, and thus a proper tension works on laminate sheet 10 located between laminate rolls 4 and 5 and guide roll 7.

The manufacturing apparatus constructed as mentioned above is used as follows. At first, two films 3 and 3 taken out from a suppling device which is not shown are made to contact both sides of the metal sheet that has passed through oven 1, and then the three members are passed through between laminate rolls 4 and 5. Subsequently, the thus laminate sheet 10 is passed on the left side of deflector roll 6 which is deviated to the left side from the tangential line N shown in Figure 1, and then is passed on the right side of guide roll 7, to thereby change its travelling direction back to the original travelling direction. The deviation distance of deflector roll 6 is suitably adjusted according to forming conditions and so on. Further, laminate sheet 10 is guided downward into quenching tank 8.

As mentioned above, since laminate sheet 10 coming out from laminate rolls 4 and 5 travels in a zigzag line, laminate sheet 10 winds round one laminate roll 4 by a predetermined winding angle (contacting angle) θ. Contacting angle θ becomes larger when deflector roll 6 is deviated to the left side in Figure 1, while it becomes smaller when deflector roll 6 is deviated to the right side. When the deviation becomes "0", the laminate sheet is guided straight downward as is conventional, and the winding angle becomes 0.

Thus, a pressing force due to the tension of laminate sheet 10 is produced between film 3 and metal sheet 2 by making laminate sheet 10 contact one laminate roll 4 by a predetermined winding angle to thereby increase a period for cooling the laminate sheet. Further in the case where the pressure roll shown in Figure 6 is provided, a greater pressing force can be produced, which can improve the cooling effect.

Since the increase of the cooling period is due to the increase of the pressing force produced between film 3 and metal sheet 2, it affects not only film 3 which contacts one laminate roll 4 but also film 3a contacting the other side of metal sheet 2 shown by the imaginary line in Figure 2. The greater the pressing force and the longer the period for contacting the laminate roll, the more the total mass of thermal conduction increases. Therefore, an initial temperature of metal sheet 2 can be raised due to the increase of the cooling period, and the thickness W of melted layer 11 on the side contacting metal sheet 2 can be increased. The relationship between the contacting period " t" of film 3 to laminate roll 4 and thickness W of melted layer 11 is substantially in direct proportion as shown in Figure 3a.

As melted layer 11 increases, adhesion of film 3 to metal sheet 2 during forming increases after being cooled. The relationship between them is also substantially in direct proportion as shown in Figure 3b. In addition to the increase of the melted layer, the increase of the period during which film 3 is pressed to metal sheet 2 multiplicably affects film 3 and its adhesion is more improved.

In the above-mentioned example, the increase of adhesion of the film during forming is explained on condition that the laminating speed is the same as that applied in the conventional method. Conversely speaking, if the adhesion is as fair enough as that obtained by the conventional manufacturing method, then the laminating can be carried out at a higher speed than conventional. Furthermore, winding the film round the laminate roll makes the contacting period of laminate sheet 10 to laminate roll 4 longer immediately after the lamination, and the cooling effect by the laminate roll can be fully obtained. Therefore, film 3 does not wholly melt even when metal sheet 2 coming out from the oven is heated to a higher temperature, and an unmelted outer layer can be reliably maintained. Accordingly, even when the laminating is carried out at a high speed, a melted layer 11 having enough thickness can be obtained, thus increasing the film adhesion during forming. In this case, the orientation of the film in the unmelted layer is reduced. Between the melted layer 11 and the orientation-reduced layer 12, is a layer having an intermediate orientation between those of both layers.

Next, concrete examples and comparison examples are given and the effect of the manufacturing method of the present invention is explained.

### (Examples 1 to 3)

A biaxially oriented polyester thermoplastic resin film having a thickness of 25 *µ*m was heat laminated on one side of a strip of electrolytically chromated steel (TFS) having a thickness of 0.2 mm used for can stock using the manufacturing apparatus as shown in Figure 1. The temperature of the steel strip just before coming into the laminate rolls was about 225°C, and that of the laminate roll spontaneously cooled was about 150°C. The travelling speeds of the laminate sheet were 100, 200 and 400 m/min in Example 1, 2 and 3, respectively. The winding angle for the laminate sheet round the laminate roll was 20° in all of the examples.

When the laminates thus obtained were formed into a cup having a diameter of 65 mm and a height of 100 mm using a drawability taster, no film crack was caused in any of the examples and 4.0 to 5.6 N/10 mm of stripping force of the film (adhering strength during forming) was required to strip the film in each example. The original orientation of the film determined by measuring the birefringence index was about 0.09, while in the laminated film, the melted layer had a birefringence index of 0.01 and a thickness of about 5 to 15 µm, the partially oriented layer had a birefringence index of about 0.058 and a thickness of about 10 to 20 µm, and the intervening layer had a birefringence index of 0.01 to 0.05 and a thickness of about 3 *µ*m.

### (Comparative examples 1 to 3)

The laminating operation for Comparative examples 1, 2 and 3 were performed under the same conditions (the travelling speeds of the laminate sheet were 100, 200 and 400 m/min, respectively) as in the above Examples except that the laminate sheet was not made to wind round the laminate roll but travelled straight downward. When the laminate sheet of Comparative example 3 was formed into a cup substantially the same as in Example, film crack was partially caused. In the case of Comparative examples 2 and 3, no film crack was caused, but the stripping forces of the film (adhering strength during forming) were 4.0 and 2.9 N/10 mm, respectively. The melted layer had a birefringence index of 0.01 and a thickness of about 0 to 5 µm, the partially oriented layer had a birefringence index of about 0.058 and a thickness of about 20 to 25 *µ*m, and the intervening layer had a birefringence index of 0.01 to 0.05 and a thickness of about 3 *µ*m. The results are shown in Tables 1 and 2.

**Table 1**

| Example | | | | |
|---|---|---|---|---|
| No | travelling speed | thickness of melted layer | thickness of oriented layer | adhering strength |
| 1 | 100 m/min | 15 µm | 10 µm | 5.6 N/10 mm |
| 2 | 200 m/min | 9 µm | 16 µm | 4.8 N/10 mm |
| 3 | 400 m/min | 5 µm | 20 µm | 4.0 N/10 mm |

**Table 2**

| Comparative example | | | | |
|---|---|---|---|---|
| No | travelling speed | thickness of melted layer | thickness of oriented layer | adhering strength |
| 1 | 100 m/min | 5 µm | 20 µm | 4.0 N/10 mm |
| 2 | 200 m/min | 2.5 µm | 22.5 µm | 2.9 N/10 mm |
| 3 | 400 m/min | 0 µm | 25 µm | 0.5 N/10 mm |

From the results shown above, it is apparent that according to the manufacturing method of the present invention, a laminate sheet having excellent adhering strength of the film to a metallic sheet and almost: free from peeling off of the film during forming can be obtained, even when the laminate sheet is manufactured at a high speed of 100∼400 m/min.

### Industrial utility

As mentioned above, according to the manufacturing method of the present invention, the adhering strength of the film to a metallic sheet can be improved and it is not reduced even when the laminating operation is performed at a high speed. According to the manufacturing apparatus of the present invention, the above-mentioned manufacturing method can easily be carried out.

It can be seen from the above that a preferred embodiment of the present invention comprises a manufacturing method for a laminate sheet (10) comprising the steps of heating a continuous belt-like metal sheet (2) by a heating furnace (1), laminating a thermoplastic resin film (3) on at least one of the surfaces of the metal sheet, passing both of them between a couple of laminate rolls (4 and 5), pressing them, and thermally bonding the film (3) to the metal sheet (2), with the laminate sheet (10) coming out from between the couple of laminate rolls (4 and 5) being pushed aside by a deflector roll (6) in a transverse direction and the deflector roll being a movably arranged deflector roll such that the laminate sheet is pushed aside in a transverse direction so as to bias its travelling direction to either one of the laminate rolls.

## Claims

1. A manufacturing method for a laminate sheet (10) comprising the steps of:
heating a continuous metal sheet (2);
laminating a thermoplastic resin film (3) at least on one of the surfaces of the metal sheet; and
passing both of them through between a couple of laminate rolls (4, 5), pressing them, and thermally bonding said film to said metal sheet;
wherein said laminate sheet (10) coming out from between said couple of laminate rolls (4, 5) is pushed aside by a deflector roll (6) in a transverse direction, **characterised in that** said deflector roll (6) is a movably arranged deflector roll such that said laminate sheet is pushed aside in a transverse direction so as to bias its travelling direction to either one of said laminate rolls (4, 5).

2. A manufacturing method according to claim 1, wherein said method further comprises the step of applying pressure to said laminate sheet (10) by a pressure roll (9) when said laminate sheet (10) which has come out through said laminate rolls (4, 5) is pushed aside to one of said laminate rolls.

3. A manufacturing apparatus comprising:
means for heating a metal sheet (2) ;
means for supplying a thermoplastic resin film (3) to be laminated at least on one surface of said heated metal sheet;
a couple of laminate rolls (4, 5) for pressing said metal sheet and said thermoplastic resin film;
a deflector roll (6), for pushing said laminate sheet (10), which has come out through the couple of laminate rolls (4, 5), in a transverse direction; and
a guide roll (7) for changing said travelling direction of said laminate sheet (10) which is biassed by said deflector roll (6) back to said original travelling direction of said laminate sheet;
**characterised in that**:
said deflector roll (6) is arranged to be movable in a direction transverse to the original travelling direction of said laminate sheet (10), so as to bias its travelling direction to either one of said laminate rolls;
and by further comprising a pressure roll (9) for increasing the contacting force of said laminate roll (4, 5) and said laminate sheet (10) when said laminate sheet which has come out through said laminate rolls is pushed aside to one of said laminate rolls.

## Patentansprüche

1. Herstellungsverfahren für ein Laminatblech (10), das die folgenden Schritte umfaßt:
Erhitzen eines Endlosmetallblechs (2),
Laminieren einer thermoplastischen Harzfolie (3) auf mindestens eine der Oberflächen des Metallblechs, und
Durchführen von beiden durch ein Paar von Laminierrollen (4,5), Verpressen von beiden und thermisches Verbinden der Folie mit dem Metallblech,
wobei das Laminatblech (10), das zwischen dem Paar von Laminierrollen (4,5) herauskommt, von einer Umlenkrolle (6) in eine Querrichtung seitwärts geschoben wird, **dadurch gekennzeichnet, daß** die Umlenkrolle (6) eine beweglich angeordnete Umlenkrolle ist, so **daß** das Laminatblech in eine Querrichtung zur Seite gedrückt wird, um seine Fortbewegungsrichtung zu einer der Laminierrollen (4,5) zu neigen.

2. Herstellungsverfahren nach Anspruch 1, wobei das Verfahren ferner den Schritt des Anlegens von Druck an das Laminatblech (10) durch eine Druckrolle (9) umfaßt, wenn das Laminatblech (10), das zwischen den Laminierrollen (4,5) herausgekommen ist, zu einer der Laminierrollen zur Seite gedrückt wird.

3. Herstellungsvorrichtung, die folgendes aufweist:
Mittel zum Erhitzen eines Metallblechs (2),
Mittel zur Zuführung einer thermoplastischen Harzfolie (3), die auf mindestens eine Oberfläche des erhitzten Metallblechs zu laminieren ist,
ein Paar von Laminierrollen (4,5) zum Verpressen des Metallblechs und der thermoplastischen Harzfolie,
eine Umlenkrolle (6) zum Drücken des Laminatblechs (10), das zwischen dem Paar von Laminierrollen (4,5) herausgekommen ist, in eine Querrichtung und
eine Führungsrolle (7) zum Ändern der Fortbewegungsrichtung des Laminatblechs (10), das durch die Umlenkrolle (6) zurück zu der ursprünglichen Fortbewegungsrichtung des Laminatblechs geneigt ist,
**dadurch gekennzeichnet, daß** die Umlenkrolle (6) dazu ausgelegt ist, in eine Querrichtung zu der ursprünglichen Fortbewegungsrichtung des Laminatblechs (10) beweglich zu sein, um seine Fortbewegungsrichtung zu einer der Laminierrollen zu neigen,
und **daß** ferner eine Druckrolle (9) zum Erhöhen der Kontaktkraft der Laminierrolle (4,5) und des Laminatblechs (10) vorgesehen ist, wenn das Laminatblech, das zwischen den Laminierrollen herausgekommen ist, zu einer der Laminierrollen zur Seite gedrückt wird.

## Revendications

1. Procédé de fabrication d'une feuille stratifiée (10) comprenant les étapes de :
chauffage d'une feuille de métal continue (2) ;
stratification d'un film de résine thermoplastique (3) au moins sur l'une des surfaces de la feuille de métal ; et
passage des deux à travers et entre un couple de rouleaux de stratification (4, 5), compression de ceux-ci, et liaison thermique dudit film sur ladite feuille de métal ;
dans lequel ladite feuille stratifiée (10) sortant d'entre ledit couple de rouleaux stratifiés (4, 5) est poussée de côté par un rouleau déflecteur (6) dans une direction transversale, **caractérisé en ce que** ledit rouleau déflecteur (6) est un rouleau déflecteur installé de façon à pouvoir se déplacer, de telle façon que ladite feuille stratifiée est poussée de côté dans une direction transversale de manière à dévier sa direction de circulation vers l'un ou l'autre desdits rouleaux de stratification (4, 5).

2. Procédé de fabrication selon la revendication 1, dans lequel ledit procédé comprend en outre l'étape d'application de pression sur ladite feuille stratifiée (10) au moyen d'un rouleau de pression (9) lorsque ladite feuille stratifiée (10) qui est sortie à travers lesdits rouleaux de stratification (4, 5) est poussée de côté vers l'un desdits rouleaux de stratification.

3. Dispositif de fabrication comprenant :
un moyen de chauffage d'une feuille de métal (2) ;
un moyen de fourniture d'un film de résine thermoplastique (3) devant être stratifié sur au moins une surface de ladite feuille de métal chauffée ;
un couple de rouleaux de stratification (4, 5) destinés à comprimer ladite feuille de métal et ledit film de résine thermoplastique ;
un rouleau déflecteur (6), destiné à pousser ladite feuille stratifiée (10), laquelle est sortie à travers le couple de rouleaux de stratification (4, 5), dans une direction transversale ; et
un rouleau de guidage (7) destiné à modifier ladite direction de circulation de ladite feuille stratifiée (10) qui est déviée par ledit rouleau déflecteur (6) pour revenir dans ladite direction de circulation d'origine de ladite feuille stratifiée ;
**caractérisé en ce que** :
ledit rouleau déflecteur (6) est installé pour pouvoir être déplacé dans une direction transversale par rapport à la direction de circulation d'origine de ladite feuille stratifiée (10), de manière à dévier sa direction de circulation vers l'un ou l'autre desdits rouleaux de stratification ;
et **en ce qu'**il comprend en outre un rouleau de pression (9) destiné à augmenter la force de contact dudit rouleau de stratification (4, 5) et de ladite feuille stratifiée (10) lorsque ladite feuille stratifiée qui est sortie à travers ledit rouleau de stratification est poussée de côté vers l'un desdits rouleaux de stratification.
